Europäisches Patentamt

European Patent Office

Office européen des brevets

(19)

(11) Numéro de publication: **0 228 307**
**A1**

(12) **DEMANDE DE BREVET EUROPEEN**

(21) Numéro de dépôt: 86400224.1

(22) Date de dépôt: 03.02.86

(51) Int. Cl.⁴: **F 24 D 3/00**
F 24 D 3/08, F 24 D 19/10

(30) Priorité: 23.12.85 FR 8519445

(43) Date de publication de la demande:
08.07.87 Bulletin 87/28

(84) Etats contractants désignés:
AT BE CH DE GB IT LI LU NL SE

(71) Demandeur: S.A. "COMPAGNIE GENERALE DE CHAUFFE"
37, avenue du Maréchal de Lattre de Tassigny
F-59350 Saint André (FR)

(72) Inventeur: Ghesquière, Pierre
45, rue Pasteur
F-92330 Sceaux (FR)

(74) Mandataire: Lepage, Jean-Pierre
Cabinet Lemoine & Associés 12, Boulevard de la Liberté
F-59800 Lille (FR)

(54) **Procédé de chauffage de locaux domestiques ou autres et d'alimentation en eau chaude à usage sanitaire, utilisant notamment l'énergie géothermique de nappes phréatiques.**

(57) L'invention est relative à un procédé de chauffage de locaux domestiques ou autres et d'alimentation en eau chaude à usage sanitaire, utilisant notamment l'énergie géothermique de nappes phréatiques.

Le procédé de la présente invention comporte les étapes suivantes :
- on prélève de la nappe phréatique (2) de l'eau chaude géothermale que l'on dirige vers le primaire (4) d'un échangeur de chaleur (3),
- on restitue l'énergie géothermique prélevée au niveau du secondaire (5) de l'échangeur (3) vers un ou plusieurs circuits individuels de chauffage (6) et de production d'eau chaude sanitaire (7),
- on établit une circulation forcée à débit fixe d'eau chaude géothermale dans le circuit primaire et une autre à débit contrôlable d'eau dans le circuit secondaire, et on régule le débit de cette circulation d'eau pour que la température de l'eau au retour (18) secondaire (5) de l'échangeur (3) soit la plus voisine de la température des retours (23) des circuits de chauffage des locaux et par suite, que la température en sortie (11) du primaire (4) de l'échangeur (3) soit la plus basse possible afin d'utiliser le maximum d'énergie géothermale prélevée.

## Description

Procédé de chauffage de locaux domestiques ou autres et d'alimentation en eau chaude à usage sanitaire, utilisant notamment l'énergie géothermique de nappes phréatiques

L'invention est relative à un procédé de chauffage de locaux domestiques ou autres et d'alimentation en eau chaude à usage sanitaire.

Plus particulièrement, elle concerne un procédé de chauffage et d'alimentation en eau chaude utilisant notamment l'énergie géothermique de nappes phréatiques et destiné à être mis en oeuvre dans une installation générale de chauffage central à eau chaude.

En effet, dans le sous-sol de la terre, il existe, dans certaines régions, des nappes phréatiques d'eau chaud qui peuvent constituer des sources géothermales. Ces nappes ont généralement été repérées par les géologues lors de sondage pétrolifère.

Par exemple, en France, on dispose de telles sources géothermales notamment en Lorraine, en Alsace, dans les Landes, dans la région parisienne et dans la région toulousaine. Les caractéristiques de ces sources sont variables selon les régions, d'une part en température et débit, et d'autre part en profondeur. Généralement, les températures sont variables de 30 à 140°C alors que la profondeur varie de 900 à 2500 mètres.

Actuellement, le coût de l'énergie étant important car elle nécessite généralement l'importation de matières premières qui sont suceptibles de variations incontrôlées, on cherche de plus en plus les énergies naturelles disponibles. C'est pourquoi depuis quelques années, on a essayé d'utiliser l'énergie de sources géothermales pour réaliser le chauffage de locaux domestiques, collectifs ou autres et d'alimentation en eau chaude à usage sanitaire de ces locaux.

Pour réaliser de telles installations, on a généralement utilisé des techniques connues, telles que des installations de chauffage central à fluide caloporteur. Généralement, ce fluide caloporteur se présente sous la forme d'eau chaude obtenue dans des chaudières utilsant les énergies traditionnelles, telles que notamment l'électricité, le fuel domestique, le gaz ou encore le charbon.

Cependant, il est à remarquer que, dans ce type d'installation à chaudière traditionnelle, le circuit d'eau chaude se présente sous un circuit fermé dans lequel on chauffe l'eau à des températures relativement élevées, de l'ordre de 90°C puis on prélève par échange une partie de la chaleur pour réchauffer l'eau chaude à usage sanitaire et/ou des circuits de radiateurs, enfin l'eau ainsi refroidie retourne vers la chaudière pour être réchauffée.

Dans de telles installations, on se soucie guère de la température à laquelle retourne l'eau à la chaudière pour être réchauffée ; en effet, plus l'eau retourne chaude vers la chaudière, moins il faudra la réchauffer de nouveau.

En adaptant de telles installations aux sources géothermales dont la température est importante, on a rencontré peu de problème et il est connu de telles installations en fonctionnement.

Dans de telles installations, l'eau des sources géothermales est relative agressive, c'est pourquoi on réalise un isolement entre l'eau géothermale et l'eau chaude circulant dans l'installation de chauffage en tant que fluide caloporteur. Pour ce, on utilise un échangeur de chaleur qui se présente sous la forme d'un appareil qui permet à un fluide chaud de céder ses calories à un fluide froid sans se mélanger. Le transfert de calories s'effectue par l'intermédiaire d'un corps solide dont la surface au contact des fluides est appelée surface d'échange.

On utilise avantageusement des échangeurs de chaleur dits "à plaques" dans lesquels la surface d'échange est constituée par une série de plaques métalliques empilées les unes sur les autres. Dans ces échangeurs, on a une double circulation, l'une appelée circulation primaire, l'autre circulation secondaire.

Ainsi, dans le cas présente, grâce à l'échangeur de chaleur, on prélève les calories de l'eau chaude géothermale dans le circuit primaire que l'on restitue ensuite par le circuit secondaire vers l'installation de chauffage traditionnelle, pouvant notamment comprendre une multitude de sous-stations, le circuit secondaire constituant alors ladite chaudière générale de l'installation traditionnelle.

En pratique, il est à remarquer que l'Homme de métier dans le domaine de chauffage utilise couramment une terminologie spécifique. Ainsi il dénomme :

- réseau géothermie : l'ensemble constituée par le puits géothermique et l'installation correspondante incluant donc le circuit primaire de l'échangeur de transfert de l'énergie géothermique,
- réseau primaire de chauffage : l'ensemble constitué par l'installation de distribution d'énergie vers les différentes sous-stations incluant donc le circuit secondaire de l'échangeur de transfert de l'énergie géothermique,
- réseau secondaire de chauffage : l'ensemble constitué par chaque installation traditionnelle de chauffage central équipée notamment de radiateurs à eau chaude,
- circuit de distribution d'eau chaude sanitaire : l'ensemble constitué par le second échangeur et l'appareil de chauffage de l'eau chaude sanitaire ainsi que son installation de distribution.

Néanmoins, pour faciliter la compréhension de la présente invention et pour éviter des ambiguités, nous n'utiliserons que les termes théoriques et non pas pratiques, c'est-à-dire : circuit primaire, circulation primaire en relation avec le côté géothermie et le primaire de l'échangeur de chaleur, ainsi que circuit secondaire et circulation secondaire en relation avec le secondaire de l'échangeur de chaleur et par suite le côté chauffage de locaux et production d'eau chaude sanitaire.

Dans les installations connues utilisant l'énergie géothermique, on retrouve généralement, disposés en parallèle sur le circuit secondaire de l'échangeur qui vient d'être décrit, au moins d'une part l'installation traditionnelle de chauffage central avec son réseau de radiateurs à eau chaude et d'autre part un second échangeur du même type que le précédent, permettant de réaliser un deuxième isolement entre le fluide caloporteur de l'installation de chauffage et l'eau chaude sanitaire. Ainsi, on produit cette eau chaude sanitaire par chauffage instantané.

Dans certains cas d'installations de chauffage utilisant l'énergie géothermique, on est amené à placer en parallèle sur le circuit une chaudière du type traditionnel, utilisant notamment l'électricité, le fuel, le gaz ou le charbon, afin de pallier aux insuffisantes de l'énergie géothermique lorsque la demande de chauffage est trop importante.

Dans certaines réalisations, où la chaleur géothermale était plus faible, notamment inférieure à 60°C, on a constaté au cours de l'exploitation de telles installations, que le circuit de chauffage complémentaire à énergie traditionnelle était fortement sollicité pour subvenir aux besoins. Ainsi, le coût d'exploitation état lourdement majoré, ce que faisait perdre toute rentabilité grâce à l'utilisation de l'énerige naturelle. A l'extrême, dans certains cas, le prix de revient d'un tel chauffage était supérieur à celui produit par des installations n'utilisant que les énergies traditionnclles, électricité, gaz, fuel.

En effet, une installation géothermique nécessite une infrastructure importante pour son fonctionnement, il faut notamment effectuer diverses forages, réaliser un puits, pomper l'eau géothermale. Par contre, l'énergie puisée est, elle, gratuite. Ainsi, pour amortir une telle installation, il faut que les économies sur l'énergie compensent largement celles faites pour réaliser l'installation et de plus avoir recours le moins souvent possible aux chaudières complémentaires.

Le but de la présente invention est de proposer un procédé de chauffage de locaux domestiques ou autres, et d'alimentation en eau chaude à usage sanitaire de ces locaux, utilisant notamment l'énergie géothermique de nappes phréatiques, qui puisse optimaliser la rentabilité d'une installation générale de chauffage central à eau chaude mettant en oeuvre ledit procédé.

Un des buts de la présente invention est de proposer un procédé de chauffage et d'alimentation en eau chaude à usage sanitaire de locaux permettant de prélever le maximum d'énergie à la source géothermale afin qu'elle soit pratiquement suffisante en elle-même et qu'elle utilise le recours à la chaudière complémentaire exceptionnellement.

Un des buts de la présente invention est de proposer un procédé de chauffage et d'alimentation en eau chaude à usage sanitaire de locaux, qui puisse être utilisé avec des sources géothermales dont la température est sensiblement voisine à celle de l'eau chaude sanitaire produite et permettant une température nominale de chauffage des locaux acceptable par des températures extérieures hivernales.

Un autre but de la présente invention est de proposer un procédé de chauffage et d'alimentation en eau chaude de locaux qui permet de minimiser le coût de l'installation de la partie dite géothermale et notamment de la puissance nécessaire pour son fonctionnement.

Un autre des buts de la présente invention est de proposer un procédé de chauffage et d'alimentation en eau chaude à usage sanitaire de locaux, qui permet de prélever à la source géothermale et restituer à l'installation générale de chauffage le maximum de calories produites naturellement.

D'autres buts et avantages de la présente invention apparaîtront au cours de la description qui va suivre qui n'est cependant donnée qu'à titre indicatif et qui n'a pas pour but de la limiter.

Selon l'invention, le procédé de chauffage de locaux domestiques ou autres et d'alimentation en eau chaude à usage sanitaire, utilisant notamment l'énergie géothermique de nappes phréatiques, mise en oeuvre dans une installation générale de chauffage centrale à eau chaude, comprenant essentiellement un circuit primaire dans lequel on prélève de la nappe phréatique de l'eau chaude géothermale et un circuit secondaire dans lequel on restitue l'énergie géothermique prélevée vers un ou plusieurs circuits individuels de chauffage dont la température nominale de chauffage des locaux est définie par Tcnl, et de production d'eau chaude sanitaire, le transfert de l'énergie étant effectué au niveau d'un échangeur de chaleur apte à isoler les circuits primaire et secondaire, est caractérisé par le fait que :
- on établit une circulation forcée à débit fixe d'eau chaude géothermale dans le circuit primaire,
- on établit une circulation forcée à débit contrôlable d'eau dans le circuit secondaire,
- on contrôle en permanence la température d'eau circulant dans le circuit secondaire,
- on régule le débit de la circulation d'eau du circuit secondaire pour que la température de l'eau au retour secondaire de l'échangeur soit la plus voisine de la température des retours des circuits de chauffage des locaux autorisant la température nominale Tncl et par suite que la température en sortie primaire de l'échangeur soit la plus basse possible afin d'utiliser le maximum d'énergie géothermale prélevée.

La présente invention sera mieux comprise à la lecture de la description qui va suivre accompagnée de la figure en annexe que en fait partie intégrante.

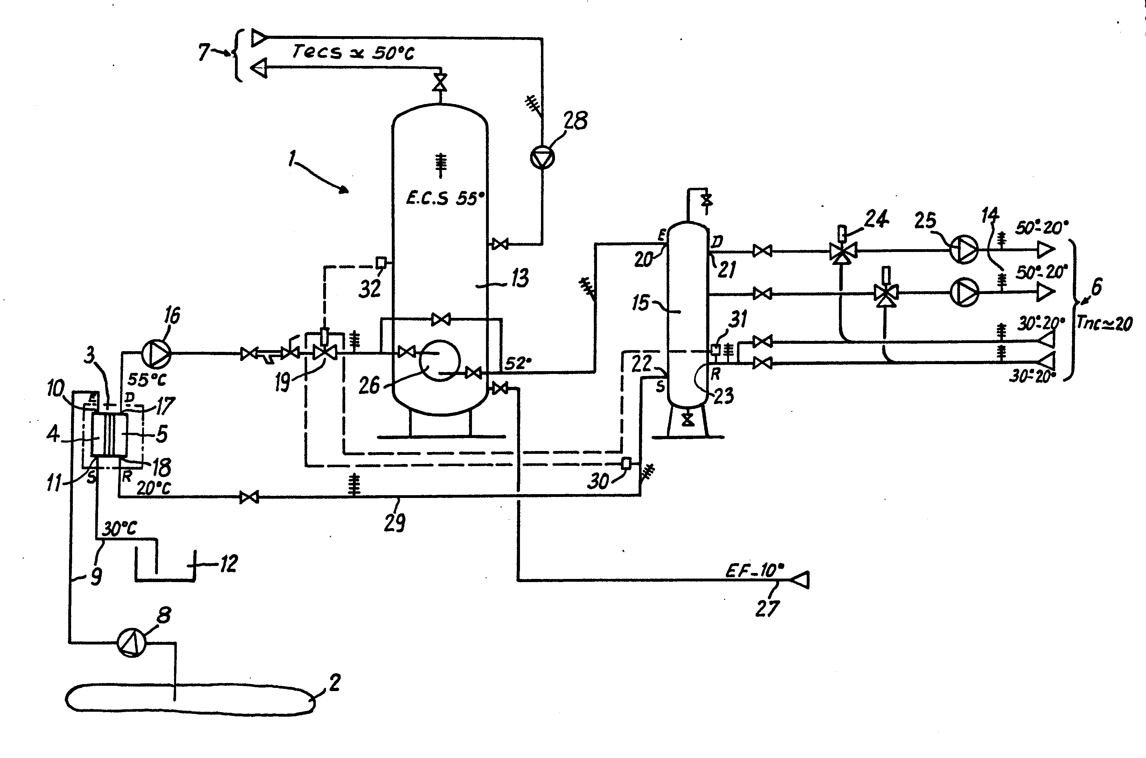

La figure 1 représente le schéma d'une installation générale de chauffage central à eau chaude, permettant la mise en oeuvre du procédé de chauffage de locaux domestiques ou autres et l'alimentation en eau chaude à usage sanitaire de la présente invention.

L'invention vise un procédé de chauffage qui utilise notamment l'énergie géothermique de nappes phréatiques disponibles dans certains sous-sols de la terre.

Certains gisements permettant d'utiliser les eaux chaudes géothermales pouvant aller jusque 140°C. Néanmoins, le procédé de chauffage de la présente invention peut être mis en oeuvre dans des régions où la température de la source géothermale est voisine de la température recommandée de l'eau chaude sanitaire.

Plus précisément, l'installation mettant en oeuvre le procédé de chauffage de la présente invention qui va être décrit permet de produite une eau chaude sanitaire de l'ordre de 50 à 55°C et permet de maintenir une température nominale de chauffage des locaux Tncl voisine de 20°C par une température extérieure voisine de 0°C et même de quelques degrés inférieurs à 0°C, tout en utilisant une source géothermale dont la température est constante et voisine de 58°C.

Néomoins, la présente invention pourrait être mise en oeuvre avec des températures d'eau géothermale légèrement inférieure ou encore supérieure à cette température, tout en présentant des bons caractères de rentabilité.

L'exemple de réalisation de la présente invention ci-dessus exposé est intéressant car il permet, en optimalisant le fonctionnement, d'obtenir une rentabilité importante tout en ayant un gisement géothermal dont la température ait un seuil pour la production d'eau chaude sanitaire en utilisant les seuls besoins de l'énergie disponible captée dans le sous-sol.

L'installation générale de chauffage central à eau chaude (1) montrée schématiquement dans un mode de réalisation préférentielle à la figure 1, utilise notamment l'énergie géothermique de nappes phréatiques (2) et permet la mise en oeuvre du procédé de chauffage de locaux domestiques ou autres et d'alimentation en eau chaude à usage sanitaire de l'invention.

Dans cette installation (1), le transfert de l'énergie géothermique vers le fluide caloporteur, notamment l'eau chaude, circulant dans l'installation générale (1), est effectué au niveau d'un échangeur de chaleur (3). Ce dernier est apte à isoler l'installation (1) de la source géothermale (2) tout en présentant un bon coefficient d'échange autorisant un minimum de perte de chaleur transmise.

L'échangeur de chaleur (3) est notamment constitué par un échangeur du type "à plaques", connu de l'Homme de l'Art, comportant un réseau primaire (4) et un réseau secondaire (5) dans lesquels circulant respectivement, sans se mélanger, l'eau chaude de la source géothermale et l'eau constituant le fluide caloporteur de l'installation (1).

L'échangeur de chaleur (3) est prévu pour fonctionner avec des fluides fort agressifs, selon la caractéristique spécifique des gisements rencontrés. De plus, c'est un appareil à fonctionnement instanté, qui permet d'obtenir sans préchauffage ni accumulation préalable le réchauffement de fluide caloporteur avec un minimum de perte de chaleur.

Par exemple, dans le cas où le réseau primaire (4) de l'échangeur de chaleur (3) est alimenté par un gisement géothermal de température voisine de 58°C, on récupère un fluide caloporteur réchauffé à 55°C au départ du réseau secondaire (5) vers l'utilisation.

Cet échangeur (3) permet de réaliser un circuit primaire dans lequel on prélève de l'eau chaude géothermale de la nappe phréatique (2) et un circuit secondaire dans lequel on restitue l'énergie géothermique prélevée vers l'utilisation notamment constituée par une ou plusieurs sous-stations, c'est-à-dire vers un ou plusieurs circuits individuels de chauffage central (6) et de production d'eau chaude sanitaire (7).

En effet, pour simplifier les explications, on n'a représenté qu'une seule sous-station d'utilisation. Néamoins, plusieurs sous-stations pourraient être connectées en parallèle sur ledit circuit secondaire de l'échangeur de chaleur.

Ces circuits de chauffage (6) et d'eau chaude (7) sont réalisés selon des techniques traditionnelles et connues de l'Homme de l'Art. Le circuit de chauffage permet notamment d'obtenir à l'interieur de locaux domestiques ou autres une température nominale de chauffage définie par Tncl voisine de 20°C. Par contre, le circuit d'eau chaude sanitaire (7) permet de soutirer une eau dont la température, définie par Tecs, est voisine de 50°C.

Le circuit primaire de l'installation (1) se présente notamment sous la forme d'un circuit ouvert et comporte en outre une pompe de circulation primaire (8) ; cette pompe est de construction connue de l'Homme de l'Art et peut notamment être constituée par une pompe à débit fixe commandée par un organe à vitesse variable ou une pompe à débit variable. Ceci permettra notamment un réglage du débit et une adaptation de la pompe à l'installation.

Le circuit primaire comporte également un ensemble de canalisations (9) qui permet de véhiculer le fluide. Ainsi, on peut établir une circulation forcée à débit fixe d'eau chaude géothermale dans le circuit primaire.

La circulation primaire s'établit ainsi : on prélève l'eau chaude géothermale dans la nappe phréatique (2), par l'intermédiaire de la pompe (8) et des canalisations (9) on dirige ce flux vers l'entrée (10) du primaire (4) de l'échangeur (3), puis on rejette l'eau s'évacuant de la sortie (11) du primaire (4) de l'échangeur (3) vers des moyens d'évacuation (12) appropriés.

Ces moyens d'évacuation (12) peuvent être la réinjection dans la nappe phréatique ou autres ou même l'écoulement peut tout simplement être dirigé vers un égout.

Le circuit secondaire de installation (1) se présente sous la forme d'un circuit fermé dans lequel on établit une circulation forcée à débit contrôlable du fluide caloporteur, notamment l'eau chaude. Sur ce circuit secondaire est raccordée au moins une sous-station dans laquelle est disposé un circuit individuel de chauffage (6) et de production d'eau chaude sanitaire (7) comprenant essentiellement un appareil de chauffage de l'eau sanitaire à accumulation (13), un système de chauffage central (14) à circulation forcée d'eau chaude dans des radiateurs ou autres, non représentés, ainsi qu'un dispositif d'équilibrage (15) des débits et des pressions existant dans ledit circuit individuel.

Pour établir la circulation forcée dans le circuit secondaire, on y insère en série une pompe de circulation secondaire (16) permettant d'établir un flux circulant du départ (17) du réseau secondaire (5) de l'échangeur (3) traversant les différents organes, notamment repérés (13), (14) et (15), puis retournant vers l'échangeur (3) par l'intermédiaire du retour (18) de son réseau secondaire (5).

Plus précisément, selon l'invention, dans le circuit secondaire de l'installation générale (1), on réalise un circuit fermé en disposant en série : le réseau secondaire (5) de l'échangeur (3), l'appareil de chauffage de l'eau sanitaire à accumulation (13) ainsi que le dispositif d'équilibrage (15) des débits et des pressions. De plus, on y insère également en série la pompe de circulation secondaire (16) qui sera avantageusement suivie d'une vanne (19) à deux voies commandée.

Il est à remarquer que, lorsque l'installation présentera plusieurs sous-stations en parallèle sur le secondaire de l'échangeur (5) on disposera pour chacune d'elle une vanne (19) indépendante.

Ainsi, on pourra maîtriser le débit de la circulation d'eau du circuit secondaire en agissant plus ou moins sur l'ouverture de cette vanne (19) dans chaque sous-station.

Enfin, selon l'invention, on dispose en parallèle sur le dispositif d'équilibrage (15) des débits et des pressions, le ou les circuits du système de chauffage central (14).

Il est à remarquer que le dispositif d'équilibrage (15) des débits et des pressions se présente notamment sous la forme d'une bouteille d'équilibre et dont la réalisation est connue de l'Homme de l'Art. Toutefois, il est à rappeler que ce dispositif est constitué par une cavité interne dans laquelle peut circuler librement le fluide caloporteur du réseau secondaire de l'installation.

Ce dispositif comporte notamment à sa partie supérieure, au moin deux orifices dits "haute température" repérés respectivement (20) et (21) et à sa partie inférieure au moins deux orifices dits "basse température", repérés respectivement (22) et (23).

Ainsi cette bouteille d'équilibre (15) est placée en série dans le réseau secondaire par l'intermédiaire d'un des orifices haute température repéré (20) et appelé "entrée", et par un des orifices basse température, repéré (22) et appelé "sortie". Par contre, le ou les circuits du système de chauffage central (14) est connecté en parallèle sur cette bouteille (15) par l'intermédiaire de l'orifice haute température (21) appelé "départ" et par l'intermédiaire de l'orifice basse température (23) appelé "retour".

De ce fait, le fluide caloporteur circulant dans le circuit secondaire est prélevé en dérivation sur la bouteille par l'orifice "depart" (21) qui, par l'intermédiaire d'une vanne motorisée à trois voies repérés (24) et d'une pompe à débit fixe repérée (25), est envoyé dans le système de chauffage central (14), le retour de l'installation s'effectuant au niveau de l'orifice basse température de retour (23).

En ce qui concerne l'appareil de chauffage de l'eau sanitaire à accumulation (13), il se présente notamment sous la forme d'une ballon d'accumulation de technique connue de l'Homme de l'Art.

Dans ce ballon d'accumultion (13) est disposé un deuxième échangeur de chaleur (26) permettant un isolement entre le circuit secondaire de l'installation et l'eau réchauffée destinée à l'usage sanitaire. Cet échangeur (26) peut notamment être du même type que celui décrit précédemment et est prévu pour minimiser au maximum les pertes d'échange.

Selon un mode de réalisation, en faisant circuler dans le primaire de l'échangeur (26) un fluide caloporteur à une température sensiblement voisine de 55°C on prélève au niveau de la distribution de l'eau chaude sanitaire (7) une eau à une température voisine de 50°C.

Généralement, pour réaliser cette distribution d'eau chaude sanitaire, le ballon d'accumulation (13) est connecté comme le montre la figure 1 à une source d'eau froide (27) et de plus, pour améliorer le confort de l'utilisateur, on dispose une pompe de recyclage (28) permettant d'accélérer l'arrivée d'eau chaude au point d'utilisation.

Par ailleurs, selon le procédé de chauffage et d'alimentation d'eau chaude sanitaire de la présente invention, on régule le débit de la circulation d'eau du circuit secondaire pour que la température de l'eau en retour, c'est-à-dire au point (18) du secondaire (5) de l'échangeur (3), soit la plus voisine de la température des retours (23) des circuits de chauffage des locaux autorisant la température intérieure Tncl et par suite que la température en sortir (11) primaire (4) de l'échangeur (3) soit la plus basse possible afin d'utiliser le maximum d'énergie géothermale prélevée.

Pour permettre cette régulation, selon la présente invention, on contrôle préalablement en permanence la température d'eau circulant dans le circuit secondaire de l'installation (1).

Plus précisément, on mesure en permanence la température d'eau circulant dans le circuit secondaire au niveau de la canalisation (29) de retour vers l'échangeur de chaleur (3) puis on régule le débit de la circulation d'eau dans ce circuit secondaire en agissant sur l'ouverture de la vanne commandée (19).

Ainsi, en maîtrisant le débit et la température dans le circuit secondaire, on arrive à prélever le plus de calories possibles au niveau de l'échangeur (3). Par exemple, au moyen de cette régulation, on parvient à faire retourner le fluide caloporteur à une température d'environ 20°C au niveau de l'orifice (18) de retour de l'échangeur (3) alors que l'eau prélevée et sortant du secondaire (5) par l'orifice (17) est sensiblement à une température voisine de 55°C.

En outre, la pompe du circuit secondaire (16) sera avantageusement commandée par un organe moteur apte à faire varier sa vitesse et par suite son débit. Ainsi, notamment par un dispositif électronique, non représenté, on peut agir sur la vitesse de la pompe secondaire (16) pour maîtriser la pression dans le circuit secondaire en fonction du réglage du débit imposé par la vanne (19).

Selon un mode préférentiel de la présente invention, on contrôle en permanence la température d'eau circulant dans le circuit secondaire au niveau des orifices basse température (23) et (22) du dispositif d'équilibrage (15) des débits et pressions, on contrôle le débit d'eau de by-pass qui traverse la bouteille d'équilibre (15) sans céder de chaleur. Plus précisément, on place un capteur de température notamment analogique au niveau de l'orifice de sortie (22) et de l'orifice de retour (23). Ces capteurs de température sont notamment repérés (30) et (31) sur le schéma de la figure 1.

D'autre part, on contrôle également en permanence la température de l'eau chaude sanitaire accumulée dans l'appareil de chauffage de l'eau sanitaire (13), notamment par l'intermédiaire d'un capteur de température analogique (32).

Ainsi, selon la présente invention, on contrôle en permanence la température de l'eau chaude du circuit secondaire en différents points stratégiques, notamment de part et d'autre de la bouteille d'équilibre (15) et au niveau du ballon d'eau chaude sanitaire (13) et on traite ces informations par des moyens électroniques d'asservissement, qui, en fonction de certains consignes d'entrée, selon l'installation et ses caractéristiques, et selon l'évolution dans le temps du circuit secondaire, commande plus ou moins l'ouverture de la vanne (19) de façon à optimaliser l'utilisation de l'énergie géothermique.

Par ailleurs, dans certains cas d'utilisation, pour compléter la régulation et conserver un retour au niveau du primaire (4) de l'échangeur (3) le plus froid possible, il sera avantageusement disposé au niveau de la pompe (8) des moyens pour ajuster le débit de la pompe primaire en fonction de la demande de l'installation générale (1) afin, notamment, d'économiser le gisement géothermique.

Ces moyens de régulation et de traitement électronique sont généralement connus de l'Homme de l'Art considéré. En effet, il s'agit d'un asservissement classique, néanmoins selon l'invention, en tant que consigne d'information du système, on tiendra compte de la température de l'eau sanitaire captée au niveau du capteur (32), de la température de l'eau de retour (22) vers le secondaire de l'échangeur au niveau du capteur (30), ainsi que de la température de l'eau au retour (23) du circuit de chauffage au niveau du capteur (31).

En outre, cette information sur la différence des températures captées par les capteurs (30) et (31) permettra également de contrôler le débit de by-pass au niveau du dispositif (15), par l'intermédiaire de la vanne (19) qui sera avantageusement une vanne du type motorisé. En effet, pour améliorer le fonctionnement du système de chauffage, il est intéressant de s'arranger pour que cette différence de température soit sensiblement nulle, ce qui sera représentatif d'un débit de by-pass nul entre l'entrée (20) et la sortie (22) du dispositif d'équilibrage (15). Autrement dit, lorsque le débit de by-pass sera nul, il n'y aura pas de circulation de fluide caloporteur perdue.

Grâce au procédé de chauffage et d'alimentation en eau chaude sanitaire de la présente invention qui vient d'être décrit, on a réalisé d'importantes économies d'énergie en utilisant au maximum l'énergie géothermique.

En effet, dans un cas de réalisation pratique, en utilisant une source géothermale dont la température est sensiblement voisine de 58°C, on arrive, sans avoir recours à une chaudière d'appoint, à satisfaire les besoins d'une installation, la température extérieure pouvant aller jusque -2°C. Pour ce, on a les valeurs typiques suivantes : - circuit primaire

débit de la source géothermale : environ 42 mètres cubes par heure,

température de l'eau à l'entrée de l'échangeur primaire : 58°C,
température à la sortie de l'échangeur primaire : sensiblement 30°C,
- circuit secondaire
débit variable
température départ de l'échangeur secondaire : 55°C
température au retour du secondaire de l'échangeur : 20°C à 30°C
température de l'eau chaude emmagasinée dans le ballon : sensiblement 55°C
température de l'eau chaude sanitaire délivrée : environ 50°C
température au départ du circuit de chauffage centrale : 50 à 20°C selon la température extérieure
température en retour du chauffage central : 30 à 20°C selon la température extérieure.

Il est à remarquer que l'installation de la présente invention a remplacé une installation existante, réalisée selon la technique connue et notamment décrite dans le préambule de la présente demande, dans laquelle pour le même débit et la même température en entrée du primaire de l'échangeur, on évacuait en sortie primaire de l'eau chaude à 48°C et ainsi on perdait toutes ces calories disponibles.

La différence d'énergie pour subvenir aux besoins était alors pompée dans une chaudière traditionelle alimentée par du fuel domestique.

Toutefois, lorsque les conditions climatiques sont rudes et notamment voisines de 0°C, on jumelera avec l'installation de chauffage géothermique (1) une chaudière à combustible traditionnel ou une chaudière électrique ou autre. Cette chaudière d'appoint sera alors opérante lorsque les quantités de calories demandées à l'installation géothermique dépasseront ses capacités. Néanmoins, les temps d'utilisation de la chaudière complémentaire seront fortement diminués par rapport aux installations connues et de ce fait, on augmentera de façon très sensible la rentabilité de l'installation de chauffage.

Naturellement, d'autres modes de réalisiation de la présente invention pouraient être envisagés sans pour autant sortir du cadre de celle-ci.

**Revendications**

1. Procédé de chauffage de locaux domestiques ou autres, et d'alimentation en eau chaude à usage sanitaire, utilisant notamment l'énergie géothermique de nappes phréatiques (2), mis en oeuvre dans une installation générale de chauffage central à eau chaude (1) comprenant essentiellement un circuit primaire dans lequel on prélève de la nappe phréatique (2) de l'eau chaude géothermale et un circuit secondaire dans lequel on restitue l'énergie géothermique prélevée vers un ou plusieurs circuits indiduels de chauffage (6) dont la température nominale de chauffage des locaux est définie par Tncl et de production d'eau chaude sanitaire (7), le transfert de l'énergie étant effectué au niveau d'un échangeur de chaleur (3) apte à isoler les circuits primaire et secondaire, **caractérisé** par le fait que :

- on établit une circulation forcée à débit fixe d'eau chaude géothermale dans le circuit primaire,

- on établit une circulation forcée à débit contrôlable d'eau dans le circuit secondaire,

- on contrôle en permanenece la température d'eau circulant dans le circuit secondaire,

- on régule le débit de la circulation d'eau du circuit secondaire pour que la température de l'eau au retour (18) secondaire (5) de l'échangeur (3) soit la plus voisine de la température des retours (23) des circuits de chauffage des locaux autorisant la température nominale Tncl et par suite que la température en sortie (11) du primaire (4) de l'échangeur (3) soit la plus basse possible afin d'utiliser le maximum d'énergie géothermale prélevée.

2. Procédé de chauffage et d'alimentation en eau chaude sanitaire, selon la revendication 1, chaque sous-station présentant un circuit individuel de chauffage (6) et de production d'eau chaude sanitaire (7) comprenant un appareil de chauffage de l'eau sanitaire à accumulation (13), un système de chauffage central (14) à circulation d'eau chaude forcée dans des radiateurs ou autres, ainsi qu'un dispositif d'équilibrage (15) des débits et des pressions existant dans ledit circuit individuel (6), (7), **caractérisé** par le fait que :

- dans le circuit secondaire de l'installation générale (1), on réalise un circuit fermé en disposant en série le secondaire (5) de l'échangeur de chaleur (3), l'appareil de chauffage de l'eau sanitaire à accumulation (13) ainsi que le dispositif d'équilibrage (15) des débits et des pressions,

- on dispose en parallèle sur le dispositif d'équilibrage (15) le ou les circuits du système de chauffage central (14),

- on établit une circulation forcée d'eau dans le circuit secondaire en y insérant en série une pompe de circulation secondaire (16) suivie, pour chaque sous-station, d'une vanne commandée (19).

3. Procédé de chauffage et d'alimentation en eau chaude sanitaire selon la revendication 2 **caractérisé** par le fait que :

- on mesure en permanence la température d'eau circulant dans le circuit secondaire au niveau de la canalisation de retour (29) vers l'échangeur de chaleur (3) puis,

- on régule le débit de la circulation d'eau du circuit secondaire en agissant sur l'ouverture de la vanne commandée (19) qui est du type "à deux voies".

4. Procédé de chauffage et d'alimentation en eau chaude sanitaire selon la revendication 2, ladite pompe de circulation secondaire (16) étant constituée par une pompe à débit fixe entraînée par un organe moteur apte à faire varier sa vitesse et par suite son débit, **caractérisé** par le fait que :

- on régule le débit de la circulation d'eau du circuit secondaire en agissant sur la vanne (19) puis,

- on agit sur la vitesse de la pompe secondaire (16) pour maîtriser la pression dans le circuit secondaire.

5. Procédé de chauffage et d'alimentation en eau chaude sanitaire, selon la revendication 3, le dispositif d'équilibrage (15) des débits et des pressions étant disposé en amont de la canalisation (29) de retour à l'échangeur de chaleur (3), ledit dispositif (15) présentant au moins deux orifices "haute température", une entrée (20) et un départ (21), et au moins deux orifices "basse température", un retour (23) et une sortie (22), **caractérisé** par le fait que

- on mesure en permanence la température d'eau circulant dans le circuit secondaire au niveau de l'orifice "basse température" de retour (23) et de l'orifice de sortie (22).

6. Procédé de chauffage et d'alimentation en eau chaude sanitaire selon la revendication 2 **caractérisé** par le fait que :

- on contrôle en permanence la température de l'eau chaude sanitaire accumulée dans l'appareil de chauffage de l'eau sanitaire (13) puis,

- on agit sur la vanne commandée (19) régulant le débit d'eau dans le circuit secondaire.

7. Procédé de chauffage et d'alimentation en eau chaude sanitaire, selon les revendications précédentes prises en combinaison, ladite vanne commandée (19) étant du type vanne motorisée à deux voies, **caractérisé** par le fait que :

- on contrôle en permanence la température de l'eau chaude du circuit secondaire au niveau de retour (23) et de la sortie (22) "basse température" du dispositif d'équilibrage (15) des pressions et des débits ainsi que la température de l'eau chaude sanitaire, au niveau du ballon d'accumulation (13),

- on traite ces informations par des moyens électroniques d'asservissement qui, en fonction de certaines consignes d'entrée, selon l'installation et ses caractéristiques, et selon l'évolution du système, commandent plus ou moins l'ouverture de la vanne (19) de façon à optimaliser l'utilisation de l'énergie géothermique.

8. Procédé de chauffage et d'alimentation en eau chaude sanitaire, selon l'une quelconque des revendications précédentes, **caractérisé** par le fait que l'on jumelle avec l'installation de chauffage géothermique (1), une chaudière à combustible traditionnel ou un chaudière électrique ou autre, cette chaudière d'appoint étant opérante lorsque les quantités de calories démandées à l'installation géothermique sont supérieures à ses capacités.

0228307

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 293 678 (PARICA)<br>* Revendication; figures * | 1 | F 24 D 3/00<br>F 24 D 3/08<br>F 24 D 19/10 |
| A | FR-A-2 554 561 (NICOLE)<br>* Abrégé * | 1 | |
| A | FR-A-2 496 857 (GRAS)<br>* Revendications 1-3; figures * | 1,5 | |
| A | DE-A-3 406 355 (FA. RUD OTTO MEYER)<br>* Abrégé * | 1 | |

DOMAINES TECHNIQUES
RECHERCHES (Int. Cl.4)

F 24 D

Le présent rapport de recherche a été établi pour toutes les revendications

| Lieu de la recherche<br>**LA HAYE** | Date d'achèvement de la recherche<br>**05-09-1986** | Examinateur<br>**VAN GESTEL H.M.** |
|---|---|---|